# EUROPÄISCHE PATENTSCHRIFT

(11) **EP 2 158 104 B1**
(45) Veröffentlichungstag und Bekanntmachung des Hinweises auf die Patenterteilung: **22.09.2010**
(21) Anmeldenummer: 08784233.2
(22) Anmeldetag: 19.06.2008
(51) Int. Cl.: B60K 17/22, F16D 3/38

(54) **LÄNGSWELLE**
PROPELLER SHAFT
ARBRE LONGITUDINAL

(30) Priorität: 21.06.2007 DE 102007029112; 27.05.2008 DE 102008025238
(43) Veröffentlichungstag der Anmeldung: 03.03.2010
(73) Patentinhaber: Ifa Technologies GmbH, 39340 Haldensleben (DE)
(72) Erfinder: LANGER, Gerald, 39345 Bülstringen (DE); SHERLOCK, John, Wolverhampton WVG 7 NG (GB)
(74) Vertreter: Leinung, Günter
(86) Internationale Anmeldenummer: PCT/DE2008/001028
(87) Internationale Veröffentlichungsnummer: WO 2008/154913

(56) Entgegenhaltungen:
- WO-A-2004/018247
- DE-A1- 4 119 359
- DE-A1- 19 929 159
- DE-A1-102005 029 754
- GB-A- 2 241 769

## Beschreibung

Die Erfindung betrifft eine Längswelle, insbesondere für den Einsatz in Kraftfahrzeugen, welche getriebeseitig und differenzialseitig mit Gelenken ausgebildet ist, wobei die Bezeichnungen getriebeseitig und differenzialseitig dabei im Sinne der Erfindung rein exemplarisch zur Unterscheidung der beiden Enden der Längswelle verwendet werden.

Bei Kraftfahrzeugen, die im Frontbereich des Kraftfahrzeuges einen Motor mit Getriebe aufweisen, wird das Antriebsmoment des Motors für den Hinterradantrieb über eine in Fahrtrichtung angeordnete Längswelle/Gelenkwelle auf das hintere Differenzialgetriebe übertragen.

Derart ausgebildete Längswellen werden üblicherweise über eine Flanschverbindung mit den Außenringen des getriebeseitigen Gelenkes und des differenzialseitigen Gelenkes an der Getriebeausgangswelle bzw. der Differenzialeingangswelle drehsicher befestigt.

Eine Vorrichtung zur Verbindung eines Gleichlaufgelenkes mit einer Welle, bei der das Gleichlaufgelenk ein Gelenkinnenteil und ein Gelenkaußenteil aufweist, zwischen denen in einem Kugelkäfig geführte und Drehmoment übertragende Kugeln angeordnet sind, ist mit der DE 197 15 852 B4 bekannt geworden, bei dem das Gelenkaußenteil an seiner zu einem Anschlussflansch der Welle weisenden Stirnseite über Rastierlaschen verfügt, die in Einsenkungen im Außenumfang des Anschlussflansches der Welle einschieb- und rastierbar sind.

Aus der DE 199 43 880 C1 ist gleichfalls eine derartige Längswelle bekannt, bei welcher die Außennaben des getriebeseitigen Gelenkes und des differenzialseitigen Gelenkes jeweils Flanschverbindungen bilden und die Außennaben der Gelenke mit der Hohlwelle der Längswelle verschweißt sind.

Eine Längsantriebswelle sowie ein Gleichlauffestgelenk für Kraftfahrzeuge, welche über Flansche mit dem Außenteil des jeweiligen Gelenkes verbunden sind, sind mit den Druckschriften DE 43 44 177 C1 und DE 43 17 606 C1 bekannt geworden, deren Außennaben als ein Blechumformteil gestaltet sind.

Zur Vereinfachung des Aufbaus und der Gestaltung einer Antriebswelle in Form einer Längswelle wurde mit der DE 41 19 359 C2 vorgeschlagen, die Längswelle in Form einer Rohrwelle mit endseitig ausgebildeten Anschlussbereichen zu gestalten, in denen Anschlusselemente koaxial angeordnet sind, welche zur Aufnahme und Befestigung von Gelenken dienen.

Die Herstellung dieser Längswellen ist mit einem hohen technischen Aufwand, aber insbesondere mit erhöhten Kostenaufwendungen verbunden, wobei ferner nachteilig ist, dass bei den im Betrieb häufig auftretenden hohen Drehzahlen der Längswelle, bis zu 10.000 u/min., bereits kleine Unwuchten der Längswelle infolge einer unzureichenden Zentrierung hohe Fliehkräfte in der Längswelle erzeugt werden, die zu Vibrationen und störenden Geräuschen führen.

Als nächst liegender Stand der Technik werden der DE 102005029754, WO 204/018247 und DE19929159 angesehen.

Der vorliegenden Erfindung liegt daher die Aufgabe zugrunde, eine Längswelle für Kraftfahrzeuge der genannten Art bereitzustellen, bei der die getriebeseitig und differenzialseitig anzuordnenden Gelenke direkt im Rohrteil der Längswelle Aufnahme finden und die Längswelle den technischen Anforderungen während des Betriebes gerecht wird.

Erfindungsgemäß wird die Aufgabe mit den Merkmalen des Anspruches 1 gelöst.

Vorteilhafte Ausführungen und besondere Gestaltungen sind in den Unteransprüchen angegeben.

Der Erfindung liegt dabei der Gedanke zugrunde, durch die Ausbildung der getriebeseitig und differenzialseitig zum Rohrteil der Längswelle anzuordnenden Gelenke eine direkte Verbindung herzustellen, wodurch die durch Unwucht auftretenden Fliehkräfte reduziert werden, somit der Komfort des Kraftfahrzeuges durch geringere Vibrationen und Geräusche der als Längswelle ausgebildeten Antriebswelle gesteigert wird.

So besteht die erfindungsgemäße Längswelle aus drei wesentlichen Funktionsbaugruppen; so aus einem Rohrteil, auch als Hohlwelle zu bezeichnen, welches aus einem Kunststoff, vorzugsweise aus einem Faserverbundmaterial, hergestellt ist. Im Rohrteil der Längswelle sind beidseitig Gelenke angeordnet, die nachfolgend als differenzialseitiges Gelenk und getriebeseitiges Gelenk bezeichnet werden, dies wiederum begründet durch die Einbauweise der Längswelle in einem Kraftfahrzeug.

Sowohl das getriebeseitige als auch das differenzialseitige Gelenk sind jeweils über ihre Außennaben im Rohrteil der Längswelle angeordnet und befestigt, dies in der Form, dass zwischen der jeweiligen Außennabe und der Innenwandung des Rohrteiles eine drehmomentenfeste Verbindung herausgebildet wird, mit der sichergestellt ist, dass eine funktionssichere Übertragung der auftretenden Drehmomente erfolgt und gleichfalls gesichert ist, dass eine erfindungsgemäß ausgebildete Längswelle problemlos zwischen zwei Getrieben eines Kraftfahrzeuges montiert oder auch demontiert werden kann.

Zur Erfindung gehört auch, dass das Rohrteil der Längswelle im Aufnahmebereich der Gelenke mit einer verstärkten Wandung gegenüber dem Mittelteil ausgebildet ist.

Wie bereits ausgeführt, sind die im Rohrteil angeordneten Gelenke drehmomentenfest über ihre Außennaben mit dem Rohrteil verbunden, die Anordnung und die Verbindung der Innenteile des differenzialseitigen und des getriebeseitigen Gelenkes erfolgt dabei in gestreckter Bauweise, wodurch eine einfachere Aufbauart der Gelenke realisiert ist und gleichfalls werden die Kombinationsmöglichkeiten der Ausbildung einer Längswelle wesentlich erhöht und verbessert.

Die getriebeseitigen und differenzialseitigen Gelenke sind sowohl als Verschiebegelenke als auch als Festgelenke ausbildbar und können in kombinierter Form zueinander in einer Längswelle angeordnet werden.

So sind erfindungsgemäße Längswellen mit zwei Verschiebegelenken oder Längswellen mit einem Verschiebegelenk und einem Festgelenk oder eine Längswelle mit zwei Festgelenken mit Verschiebung herstellbar.

Die drehmomentenfeste Verbindung zwischen den Außennaben der differenzialseitigen und getriebeseitigen Gelenke zum Rohrteil kann durch eine Pressverbindung oder eine Klebeverbindung hergestellt werden, mittels denen sowohl eine kraft- als auch formschlüssige Verbindung zwischen den gefügten Bauteilen gegeben ist, wobei die Ausbildung der drehmomentenfesten Verbindungen nicht auf die angegebenen Verbindungsarten beschränkt ist und auch andere Verbindungsmöglichkeiten zur Anwendung kommen können.

Die Abdichtung des getriebeseitigen und des differenzialseitigen Gelenkes erfolgt zum Inneren des Rohrteiles der Längswelle über in den Außennaben vorgesehene Deckel und nach außen hin wird das jeweilige Getriebe über übliche Abdichtungssysteme verschlossen, so dass sichergestellt ist, dass das im Inneren der Gelenke vorhandene Schmierfett nicht ungehindert austreten kann und gleichfalls verhindert wird, dass Fremdstoffe in das Innere der Gelenke eindringen können.

Die Einbindung einer erfindungsgemäß hergestellten Längswelle in das Antriebssystem eines Kraftfahrzeuges erfolgt über in den Innennaben der Gelenke vorgesehene Profilierungen, in denen die Difierenzialwelle bzw. die Getriebewelle direkt oder über einen entsprechenden Wellenzapfen, welche im Anschlussbereich beide die gleiche Profilierung besitzen wie die Innennaben, gefügt und mittels Spannschrauben zueinander arretiert werden.

Mit den nachfolgenden Ausführungen und den beigefügten Zeichnungen wird die Erfindung näher erläutert.

Die Zeichnungen zeigen in
- Figur 1:: eine Längswelle mit einem als Verschiebegelenk ausgebildeten differen- zialseitigen Gelenk und einem als Festgelenk ausgebildeten getriebeseiti- gen Gelenk,
- Figur 2:: eine Längswelle mit differenzialseitigem und getriebeseitigem Gelenk, die als Festgelenke mit Verschiebung ausgebildet sind und
- Figur 3:: eine Längswelle mit differenzialseitigem und getriebeseitigem Gelenk, welche jeweils als Verschiebegelenke ausgebildet sind.

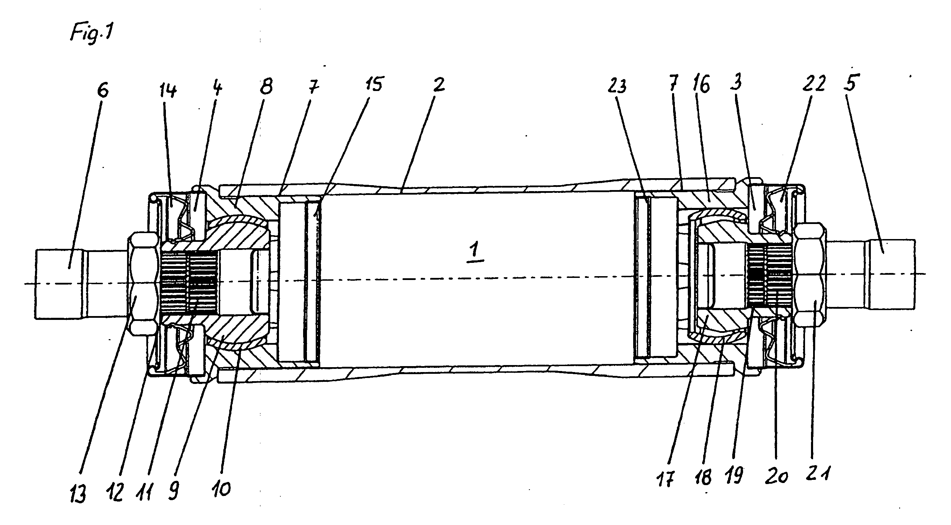

Die in der Figur 1 dargestellte Längswelle 1 besteht aus dem Rohrteil 2 und den beidseitig im Rohrteil 2 drehmomentenfest angeordneten Gelenken 3; 4, dem differenzialseitigen Gelenk 3 und dem getriebeseitigen Gelenk 4.

Das differenzialseitige Gelenk 3 ist als ein Verschiebegelenk und das getriebeseitige Gelenk 4 ist als Festgelenk ausgebildet. Das differenzialseitige Gelenk 3 und das getriebeseitige Gelenk 4 sind über ihre Außennaben 16; 18 im Rohrteil 2 eingesetzt und die drehmomentenfeste Verbindung wird erreicht durch eine Pressverbindung, Klebeverbindung oder eine ähnliche form- und kraftschlüssige Verbindung zwischen den Außennaben 16; 18 zu dem jeweiligen Aufnahmebereich 7 des Rohrteiles 2.

Wie in der Figur 1 auch gezeigt, ist das Rohrteil 2 in seinen beidseitigen Aufnahmebereichen 7 mit einer stärkeren Wanddicke ausgebildet als dessen Mittelstück.

Wie auch aus der Figur 1 ersichtlich, besteht das differenzialseitige Gelenk 3 aus der Außennabe 16 und der zur Außennabe 16 gefügten Innennabe 17 sowie im Kugelkäfig 18 geführten Kugeln, welche in Laufrillen der Außennabe 16 und der Innennabe 17 geführt sind.

Abgedichtet wird dieses differenzialseitige Gelenk 3 zum Inneren der Längswelle 1 mittels eines Deckels 23 und nach außen über die vorgesehene Dichtung 22.

Die Verbindung zur Differenzialwelle 5 erfolgt über form- und kraftschlüssige Verbindungen, über Profilierungen in Form von beispielsweise Kerbverzahnungen, die auf dem äußeren Umfang der Differenzialwelle 5 und in der Bohrung der Innennabe 17 vorgesehen sind.

Ist die Differenzialwelle 5 nach ihrer Montage zur Längswelle 1 positioniert, erfolgt ein Verschrauben dieser beiden Teile über eine vorgesehene Spannschraube 21.

Das getriebeseitige Gelenk 4, ein Festgelenk, besteht aus der Außennabe 8, der Innennabe 9 und den im Kugelkäfig 10 geführten und positionierten Kugeln. Sowohl die Außennabe 8 als auch die Innennabe 9 sind gleichfalls mit entsprechenden Laufrillen ausgebildet, in denen die Kugeln führend gelagert sind, wobei diese Funktionsteile so zueinander ausgebildet und gefügt sind, dass das getriebeseitige Gelenk 4 leicht gebeugt werden kann.

Die Abdichtung des getriebeseitigen Gelenkes 4 erfolgt zum Inneren des Rohrteiles 2 der Längswelle 1 über einen in der Außennabe 8 eingebundenen Deckel 15 und nach außen hin über die vorgesehene Dichtung 14.

Auch die Innennabe 9 des getriebeseitigen Gelenkes 4 besitzt in ihrer Bohrung Profilierungen 11, beispielsweise Kerbverzahnungen, mit der auch die einzusetzende Getriebewelle 6 ausgebildet ist, in der Figur 1 mit der Bezugszahl 12 gekennzeichnet.

Ist die Getriebewelle 6 in dem getriebeseitigen Gelenk 4 eingesetzt und die Längswelle 1 entsprechend längenmäßig positioniert, erfolgt über die Spannschraube 13 die Arretierung und Verspannung dieser beiden Teile.

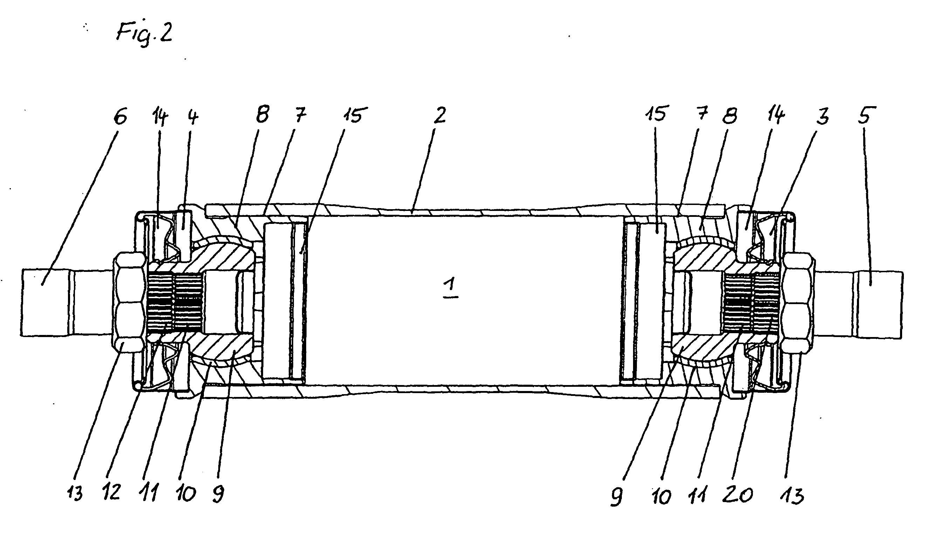

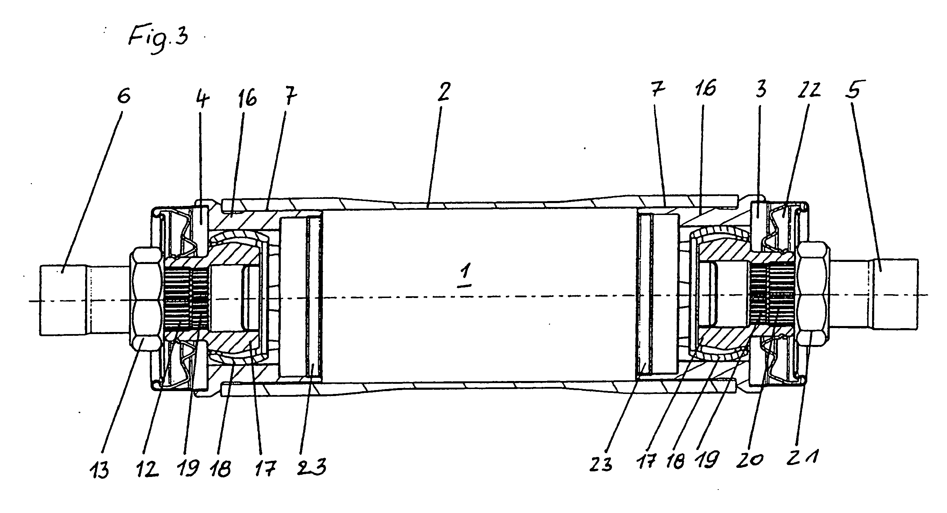

In den Figuren 2 und 3 sind die beiden weiteren Kombinationsmöglichkeiten der Ausbildung einer Längswelle 1 mit den beiden Gelenken 3; 4 gezeigt.

So bezieht sich die Darstellung nach Figur 2 auf eine Längswelle 1, welche beidseitig mit im Rohrteil 2 eingesetzten Festgelenken ausgebildet ist. Sowohl das differenzialseitige als auch das getriebeseitige Gelenk 3; 4 sind als Festgelenke ausgebildet, welche in ihrer Ausbildung dem beschriebenen Festgelenk nach dem vorherigen Ausfuhrungsbeispiel in der Figur 1 als getriebeseitiges Gelenk 4 dargestellt, entsprechen und beschrieben sind.

Eine weitere Kombinationsmöglichkeit zur Gestaltung einer Längswelle 1 nach der Erfindung zeigt die Figur 3. Die hier gezeigte Längswelle 1 besteht auch aus dem Rohrteil 2 und dem beidseitig im Rohrteil 2 drehmomentenfest angeordneten differenzialseitigen Gelenk 3 und dem getriebeseitigen Gelenk 4, welche bei dieser Ausführung der Längswelle 1 als Verschiebegelenke ausgebildet sind.

Zur Vermeidung von Wiederholungen wird bezüglich des Aufbaus und der Ausbildung dieser beiden Gelenke 3; 4 auf die obigen Ausführungen verwiesen.

Die Montage der Längswelle 1 zwischen der Getriebewelle 6 bzw. zu einem Zapfen einer Getriebewelle 6, nicht dargestellt, und der Differenzialwelle 5 erfolgt beispielsweise derart, indem zunächst die Innennabe 9 des getriebeseitigen Gelenkes 4 auf die Getriebewelle 6 aufgesteckt wird.

Danach wird die Differenzialwelle 5 oder deren Wellenzapfen, welcher nicht in den Figuren dargestellt ist, zur Innennabe 17 des differenzialseitigen Gelenkes 3 eingesetzt, die Teile werden zueinander positioniert und dann erfolgt die Verspannung über die Spannschrauben 13 und 21.

## Patentansprüche

1. Längswelle, insbesondere für den Einsatz in Kraftfahrzeugen, bestehend aus einem Rohrteil (2) mit je einem beidseitig zum Rohrteil (2) vorgesehenen differenzialseitigen Gelenk (3) und getriebeseitigen Gelenk (4), in denen eine Differenzialwelle (5) und eine Getriebewelle (6) Aufnahme finden,
wobei
das differenzialseitige Gelenk (3) und das getriebeseitige Gelenk (4) über ihre Außennaben (16; 8) drehmomentfest in den beidseitig vom Rohrteil (2) vorgesehenen Aufnahmebereichen (7) angeordnet, die Gelenke (3; 4) als Verschiebegelenke und/oder als Festgelenke ausgebildet sind, wobei die Innennabe (17) des differenzialseitigen Gelenkes (3) und die Innennabe (9) des getriebeseitigen Gelenkes (4) Profilierungen (19; 11) besitzen, in denen die mit Profilierungen (20; 12) ausgebildete Differenzialwelle (5) und Getriebewelle (6) fügbar sind, **dadurch gekennzeichnet, dass** die Differenzialwelle (5) und die Getriebewelle (6) über Spannschrauben (21; 13) zueinander verspannt und befestigt sind.

2. Längswelle nach Anspruch 1, **dadurch gekennzeichnet, dass**
die drehmomentfesten Verbindungen zwischen den Außennaben (8; 16) der Gelenke (3; 4) und den Aufnahmebereichen (7) vom Rohrteil (2) als eine Press- oder Klebeverbindung oder als eine ähnliche form- und kraftschlüssige Verbindung ausgebildet sind.

3. Längswelle nach den Ansprüchen 1 und 2, **dadurch gekennzeichnet, dass**
das differenzialseitige Gelenk (3) und das getriebeseitige Gelenk (4) über ihre Innennaben (17; 9) zur Differenzialwelle (5) und zur Getriebewelle (6) in gesteckter Bauweise ausgeführt sind.

4. Längswelle nach den Ansprüchen 1 bis 3, **dadurch gekennzeichnet, dass**
das Rohrteil (2) in den Aufnahmebereichen (7) des differenzialseitigen Gelenkes (3) und des getriebeseitigen Gelenkes (4) mit einer, gegenüber dem Mittelteil des Rohrteiles (2), verstärkten Wanddicke ausgebildet ist.

5. Längswelle nach den Ansprüchen 1 bis 4, **dadurch gekennzeichnet, dass**
das differenzialseitige Gelenk (3) und das getriebeseitige Gelenk (4) zum Inneren des Rohrteiles (2) mittels in den Außennaben (16; 8) vorgesehener Deckel (23; 15) abgedichtet sind.

## Claims

1. Longitudinal shaft, in particular for use in motor vehicles, consisting of a tubular part (2) provided with a differential-side joint (3) and a gear-side joint (4) on both sides of the tubular part (2) which hold a differential shaft (5) and a gear shaft (6), whereby the differential-side joint (3) and the gear-side joint (4) are arranged safe against torsion via their outer hubs (16; 8) in the holding areas (7) provided on both sides of the tubular part (2), the joints (3; 4) being formed as slip joints and/or as fixed joints, whereby the inner hub (17) of the differential-side joint (3) and the inner hub (9) of the gear-side joint (4) possess profiles (19; 11) in which the differential shaft (5) and gear shaft (6) executed with profiles (20; 12) can be joined, **characterised in that**
the differential shaft (5) and the gear shaft (6) are braced and secured in relation to each other via turnbuckle screws (21; 13).

2. Longitudinal shaft according to claim 1, **characterised in that**
the connections safe against torsion between the outer hubs (8; 16) of the joints (3; 4) and the holding areas (7) of tubular part (2) are formed as a press fitting or bonded fitting or as a similar form-locked and force-locked connection.

3. Longitudinal shaft according to claims 1 and 2 **characterised in that**
the differential-side joint (3) and the gear-side joint (4) are plugged via their inner hubs (17; 9) to the differential shaft (5) and to the gear shaft (6).

4. Longitudinal shaft according to claims 1 to 3, **characterised in that**
the tubular part (2) is formed with a greater wall thickness in the holding areas (7) of the differential-side joint (3) and the gear-side joint (4) than the wall thickness in the middle area of the tubular part (2).

5. Longitudinal shaft according to claims 1 to 4 **characterised in that**
the differential-side joint (3) and the gear-side joint (4) are sealed against the inside of the tubular part (2) by means of lids (23; 15) provided in the outer hubs (16; 8).

## Revendications

1. Arbre longitudinal particulièrement destiné à une utilisation dans des véhicules, composé d'un élément tubulaire (2) doté d'une articulation côté différentiel (3) et d'une articulation côté boîte de vitesses (4), prévues des deux côtés de l'élément tubulaire (2), dans lesquelles sont logés un arbre de différentiel (5) et un arbre de boîte de vitesses (6), moyennant quoi
l'articulation côté différentiel (3) et l'articulation côté boîte de vitesses (4) sont disposées, par leurs moyeux extérieurs (16; 8), avec couple de rotation fixe, dans les zones de logement (7) prévues des deux côtés de l'élément tubulaire (2) et les articulations (3; 4) sont constituées comme articulations mobiles et/ou comme articulations fixes, le moyeu intérieur (17) de l'articulation côté différentiel (3) et le moyeu intérieur (9) de l'articulation côté boîte de vitesses (4) possédant des profilages (19; 11), dans lesquels l'arbre du différentiel (5) et l'arbre de la boîte de vitesses (6), constitués avec des profilages (20; 12), sont assemblables, **caractérisé par le fait que**
l'arbre du différentiel (5) et l'arbre de la boîte de vitesses (6) sont serrés et fixés au moyen de vis de serrage (21; 13).

2. Arbre longitudinal conformément à la revendication 1, **caractérisé par le fait que**
les assemblages à couple de rotation fixe entre les moyeux extérieurs (8; 16) des articulations (3; 4) et les zones de logement (7) depuis l'élément tubulaire (2) sont constitués comme assemblages par compression ou par collage ou comme assemblages autoverrouillables et par liaison de force similaires.

3. Arbre longitudinal conformément aux revendications 1 et 2, **caractérisé par le fait que**
l'articulation côté différentiel (3) et l'articulation côté boîte de vitesses (4) sont exécutées en conception embrochée par leurs moyeux intérieurs (17; 9) vers l'arbre du différentiel (5) et vers l'arbre de la boîte de vitesses (6).

4. Arbre longitudinal conformément aux revendications 1 à 3, **caractérisé par le fait que**
l'élément tubulaire (2) est constitué, dans les zones de logement (7) de l'articulation côté différentiel (3) et de l'articulation côté boîte de vitesses (4), avec une épaisseur de paroi renforcée par rapport à la partie centrale de l'élément tubulaire (2).

5. Arbre longitudinal conformément aux revendications 1 à 4, **caractérisé par le fait que**
l'articulation côté différentiel (3) et l'articulation côté boîte de vitesses (4) vers l'intérieur de l'élément tubulaire (2) sont étanchéifiées au moyen de couvercles (23; 15) prévus dans les moyeux extérieurs (16; 8).
